(19) Europäisches Patentamt
European Patent Office
Office européen des brevets

(11) **EP 4 687 023 A1**

(12) **EUROPEAN PATENT APPLICATION**

(43) Date of publication:
**04.02.2026 Bulletin 2026/06**

(21) Application number: **24382835.7**

(22) Date of filing: **30.07.2024**

(51) International Patent Classification (IPC):
**G06F 7/544** $^{(2006.01)}$

(52) Cooperative Patent Classification (CPC):
**G06F 7/5443**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Vodafone Group Services Limited
Newbury RG14 2FN (GB)**

(72) Inventors:
• **CAFFARENA FERNÁNDEZ, Gabriel
LONDON, W2 6BY (GB)**
• **ROMAN JOBACHO, Francisco Jose
LONDON, W2 6BY (GB)**
• **CORRALES HERNÁNDEZ, Carlos
LONDON, W2 6BY (GB)**
• **MORENO SOLÍS, Alvaro
LONDON, W2 6BY (GB)**

(74) Representative: **Boult Wade Tennant LLP
Salisbury Square House
8 Salisbury Square
London EC4Y 8AP (GB)**

(54) **COMPLEX DOT PRODUCT**

(57) There is provided herein a computational method for performing a complex dot product on two vectors, each of the two vectors having a dimension N and comprising vector elements, at least one of the vector elements having an imaginary part, j, the computational method being performed by one or more arithmetic logic units, ALUs. The method comprises: iteratively performing N times a first plurality of operations, $S_x$, by the one or more ALUs, on the vector elements of the two vectors, to calculate a first set of results, the first set of results being stored in memory associated with the one or more ALUs; performing a second plurality of operations, by the one or more ALUs, on the first set of results to calculate a Real component of the complex dot product and an imaginary component of the complex dot product, wherein each of the second plurality of operations is performed a single time. There is also provided a computer processor comprising one or more arithmetic units, each configured to perform the computational method.

Figure 4

**Description**

FIELD OF THE INVENTION

The invention is related to digital signal processing. In particular, the invention is related to performing a complex dot product operation using digital signal processing.

BACKGROUND

A complex dot product is an operation applied to input vectors to generate a scalar result. The complex dot product is used in digital signal processing, particularly in baseband signal processing in wireless communications. The complex dot product can also be used as the basis for matrix multiplications. As the complex dot product may comprise a large number of operations, the complex dot product may be time consuming and use a large amount of energy. Therefore, it is advantageous to provide an improved method of providing a dot product to reduce the amount of energy used by one or more Arithmetic Logic Units (ALUs) performing the dot product.

SUMMARY

Against this background, the present disclosure provides a computational method for performing a complex dot product on two vectors. A computer processor comprising one or more arithmetic logic units configured to perform the computational method is also provided.

In a first aspect, there is provided a computational method for performing a complex dot product on two vectors, each of the two vectors has a dimension N and comprises vector elements. At least one of the vector elements has an imaginary part, j, and the computational method is performed by one or more arithmetic logic units, ALUs. The method comprises iteratively performing N times a first plurality of operations, $S_x$, by the one or more ALUs, on the vector elements of the two vectors, to calculate a first set of results, the first set of results being stored in memory associated with the one or more ALUs; and performing a second plurality of operations, by the one or more ALUs, on the first set of results to calculate a Real component of the complex dot product and an Imaginary component of the complex dot product, wherein each of the second plurality of operations is performed a single time.

The first aspect therefore provides a method of performing a dot product wherein a number of operations are performed a single time, rather than each operation being included in an iterative loop. Therefore, when each vector has N elements, some operations are performed iteratively, i.e. N times, however some operations are also only performed once. This provides the ability to reduce the number of operations, or reduce the number of a particular type of operation. By providing a computational method in which some operations are performed outside of the iterative loop, this enables the order of operations to be altered compared to known methods. Therefore, the number of high energy operations can be reduced, and in some examples, the number of lower energy operations can be increased, whilst still reducing the overall energy required to perform the complex dot product. Furthermore, operations which are slow to perform may be performed less, to increase the speed of the complex dot product.

Optionally, the first plurality of operations comprises any one or more of: subtraction operations; addition operations; accumulation operations; and multiplication operations on the vector elements of the two vectors.

Optionally, the second plurality of operations comprises any one or more of addition operations; and subtraction operations on the vector elements of the two vectors.

Optionally the method comprises performing one operation of the first plurality of operations to calculate a first result of the first set of results, and performing a second operation of the first plurality of operations to calculate a second result of the first set of results, wherein the second operation uses the first result to calculate the second result. This has the advantage that the energy required to perform the complex dot product may be further reduced, by reusing results, such that the number of operations can be reduced. Furthermore, the speed at which the complex dot product is performed can be reduced.

Optionally the first plurality of operations and the second plurality of operations are performed to determine the result of a dot product operation $< u, v >= \sum_{i=1}^{N} u_i \cdot v_i^* = \sum_{i=1}^{N}(a_i c_i + b_i d_i) + j \sum_{i=1}^{N}\big((a_i + b_i)(c_i - d_i) - a_i c_i + b_i d_i\big)$, wherein **u** and **v** are vectors, and $a_i$, $b_i$, $c_i$, $d_i$ are each vector elements. Alternatively, the first plurality of operations and the second plurality of operation are performed to determine the result of a dot product operation $< u, v >= \sum_{i=1}^{N} u_i \cdot v_i = \sum_{i=1}^{N}(a_i c_i + b_i d_i) + j \sum_{i=1}^{N}\big((a_i + b_i)(c_i + d_i) + a_i c_i + b_i d_i\big)$.

Optionally, the operations of the first plurality of operations, $S_x$, comprise one or more: of

$$S_1 = \sum_{i=1}^{N} a_i c_i; \; S_2 = \sum_{i=1}^{N} b_i d_i \; ; \text{ and } \; S_3 = \sum_{i=1}^{N} (a_i + b_i)(c_i - d_i).$$

Optionally, the second plurality of operations calculate the Real component of the complex dot product and the Imaginary component of the complex dot product according to $< \textbf{\textit{u, v}} >= (S_1 + S_2) + j(S_3 - S_1 + S_2)$. This has the advantage that the second plurality of operations does not include iterations or accumulations. Furthermore, this equation allows the results for $S_1$ and $S_2$ to be used for both the Real and Imaginary parts of the dot product, and therefore the energy requirements are lower, and the speed at which the dot product can be performed is faster, compared to known methods in which it is not possible to reuse results within the calculation of the dot product.

Optionally, the vector elements may be provided to the one or more ALUs via a digital interface, or from a memory to which the one or more ALUs has access. Optionally, a parallel bus may feed all of the vector elements to the one or more ALUs simultaneously and another output bus may be provided for the result of the dot product. Alternatively, a serial bus may feed the data sequentially to the one or more ALUs and another serial bus may be provided for the output. Alternatively, a parallel bus may be connected to one or more memory units, and the vector elements may be received at the one or more ALUs from ROM (Read-only memory) or RAM (Random-access memory), while the output can be stored in RAM memory, wherein the RAM memory for the output is the same or different to the RAM memory used for the input.

In a second aspect, there is provided a computer processor comprising one or more arithmetic logic units, each configured to perform any method described herein. The computer processor may further comprise a control unit and/or a memory unit. The memory unit may be RAM or ROM, or any other suitable memory unit.

Where there are a plurality of arithmetic logic units, the arithmetic logic units are optionally arranged in parallel. This has the advantage that the complex dot product may be performed in less time, as each ALU in parallel performs a share of the operations. Therefore, in an example in which the vectors each have N elements, and there are three ALUs arranged in parallel, each ALU may perform the first set of operations N/3 times.

Optionally, the computer processor is a central processing unit (CPU).

Optionally, the central processing unit may be implemented as a microprocessor or as a part of a system on chip (SoC) in an Application-Specific Integrated Circuit (ASIC) or a Field-Programmable Gate Array (FPGA) or a programmable logic device.

Optionally, the computer processor may comprise a custom circuit with or without a CPU.

Optionally, the computer processor may be an Application-Specific Integrated Circuit (ASIC) or a Field-Programmable Gate Array (FPGA).

BRIEF DESCRIPTION OF DRAWINGS

Various aspects of at least one embodiment are discussed below with reference to the accompanying figures, which are not intended to be drawn to scale. The figures are included to provide illustration and a further understanding of the various aspects and embodiments, and are incorporated in and constitute a part of this specification, but are not intended as a definition of the limits of the invention. In the figures, each identical or nearly identical component that is illustrated in various figures is represented by a like numeral. For purposes of clarity, not every component may be labelled in every figure.

Figure 1 illustrates a first known method of performing a complex dot product;
Figure 2 illustrates a second known method of performing a complex dot product;
Figure 3 illustrates a third known method of performing a complex dot product;
Figure 4 illustrates a method according to the present invention;
Figure 5 illustrates a flowchart of a method which may be incorporated into the present invention;
Figure 6 illustrates a flowchart of a method which may be incorporated into the present invention
Figure 7 shows a block diagram of a CPU configured to perform a method according to the present invention; and
Figure 8 shows a method according to the present invention.

DETAILED DESCRIPTION

The invention will now be described in relation to specific embodiments. The embodiments described herein are not intended to be limiting and are simply for illustrative purposes.

All of the aspects and/or features disclosed in this specification may be combined in any combination, except combinations where at least some of such features and/or steps are mutually exclusive. In particular, the preferred features of the disclosure are applicable to all aspects and embodiments of the disclosure and may be used in any combination.

Likewise, features described in non-essential combinations may be used separately (not in combination).

In general, a complex dot product is an operation which is the basis for many functions. In the context of wireless technology, the complex dot product can be used in wireless local area network (wireless LAN) and mobile broadband network standards, for example Long Term Evolution (LTE), 4G and 5G technology, including as defined by the Third Generation Partnership Project (3GPP). The complex dot product may be used in signal processing tasks, for example modulation, demodulation, beamforming and multiple-input-multiple-output (MIMO) systems. In particular, the complex dot product may be used in OFDM (orthogonal frequency-division multiplexing) MIMO and Massive MIMO equalization; OFDM Massive MIMO beamforming; and Radar applications including beamforming and doppler filtering.

One example use of a complex dot product according to the present invention, i.e. using the third method described herein, is in OFDM. In OFDM, data may be modulated onto multiple subcarriers according to modulation such as QPSK (Quadrature Phase Shift Keying), QAM (quadrature amplitude modulation) and others. Each subcarrier can be seen as an independent digital communication channel transmitting digital symbols $x_i$. Each subcarrier represents a complex number, that provides both amplitude and phase information. For N radio access devices (or equivalently using 3GPP terminology, user equipment or UEs) transmitting an OFDM signal (comprised of S subcarriers), the digital symbols transmitted by the UE are combined into vector $\boldsymbol{x_s} = \{x_{0,s}, x_{1,s}, \ldots, x_{N-1,S}\}$, and a radio with $M$ receiver systems ($M > N$) receives a vector $\boldsymbol{y_s} = \{y_{0,s}, y_{1,s}, \ldots, y_{M-1,s}\}$. Each received digital symbol $y_{i,s}$ is processed in order to recover the original symbols sent. The complex dot product may be used in demodulation to correlate the received signal with the subcarrier frequencies.

Symbols $\boldsymbol{x_i}$ have been rotated and scaled due to the effect of the communication channel between each user and antenna. Symbols $\boldsymbol{y_s}$ are linear combinations of the corrupted symbols $\boldsymbol{x_i}$ plus noise. Recovery of the original information is achieved by:

Estimating the channel from each user and antenna, for each frequency (where the channel matrix is $\mathbf{H_s}$); and
Obtaining from the channel matrix $\mathbf{H_s}$ the detection matrix $\mathbf{W_s}$. The detection matrix is used to recover an estimation of the original vector $\boldsymbol{x_s}$ from the received signal vector $\boldsymbol{y_s}$.

In this example, the dot product is used to estimate the original vector $\boldsymbol{x_s}$, according to equation 1:

$$\hat{x} = \boldsymbol{y} \cdot W_s \qquad (1)$$

In the example of 5G, the values of N and M for high performance 5G radios are N=8 and M=64. Additionally, 5G communication with 100 MHz bandwidth uses 3300 subcarriers (S=3300). Therefore, it has been appreciated herein that it would be advantageous to increase the efficiency of the dot product operation, by improving the efficiency of ALU operation carrying out the dot product. By decreasing the energy required to perform a complex dot product and/or reducing the time required to perform a complex dot product, a large amount of time and energy can be saved in 5G applications where a large number of dot products need to be carried out (as described herein with reference to table 3).

Methods for calculating the dot product will now be described. The dot product is defined as:

$$\boldsymbol{u}, \boldsymbol{v} \in \mathbb{C}^N, \langle \boldsymbol{u}, \boldsymbol{v} \rangle = \sum_{i=1}^{N} u_i \cdot v_i^* \left( or \sum_{i=1}^{N} u_i^* \cdot v_i \right) \qquad (2)$$

Therefore, the basic operation is the multiplication of two complex numbers $u$ and $v^*$, where:

$$u \in \mathbb{C} : u = a + jb \qquad (3)$$

$$v \in \mathbb{C} : v^* = c - jd \qquad (4)$$

$j$ denotes the imaginary unit, and $a, b, c, d$ are vector components and $i$ represents an index. Two known methods (referred to as the first and second method herein) for computing the dot product are described herein. The first method computes the dot product according to:

$$u \cdot v^* = (ac + bd) + j(-ad + bc) \qquad (5)$$

The second method computes the dot product according to:

$$u \cdot v^* = ac + bd + j\big((a+b)(c-d) - ac + bd\big) \qquad (6)$$

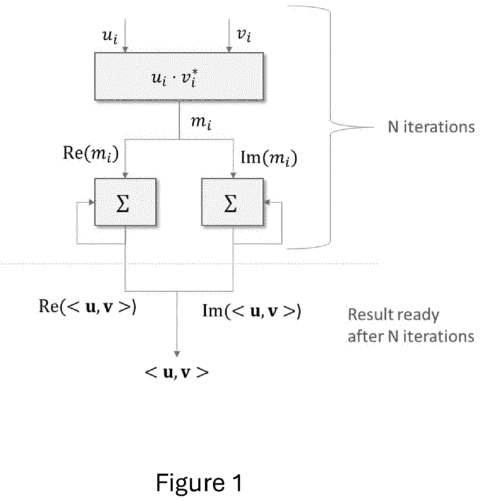

Using either the first or second methods, the dot product of N-element vectors can then be computed using an algorithm, illustrated in figure 1. In other words, $m_i = u_i \cdot v_i^*$ is calculated for $i$ = 1, and $m_i$ is accumulated. This calculation is repeated for $i = i + 1$, until $i = N$ has been calculated. As shown in figure 1, this results in an iterative process, in which the dot product and accumulation is performed over N iterations. Using this algorithm, it is possible to determine the Real component of the dot product, $Re(<\boldsymbol{u}, \boldsymbol{v}>)$ and the Imaginary component of the dot product $Im(<\boldsymbol{u}, \boldsymbol{v}>)$. As shown, the complex numbers from the vectors are provided sequentially to the complex multiplier and the result ($m_i$) is accumulated. The accumulation requires two separate accumulators, each having corresponding hardware components (such as one or more ALUs and associated storage), one for the real part of the multiplication result and other for the imaginary part.

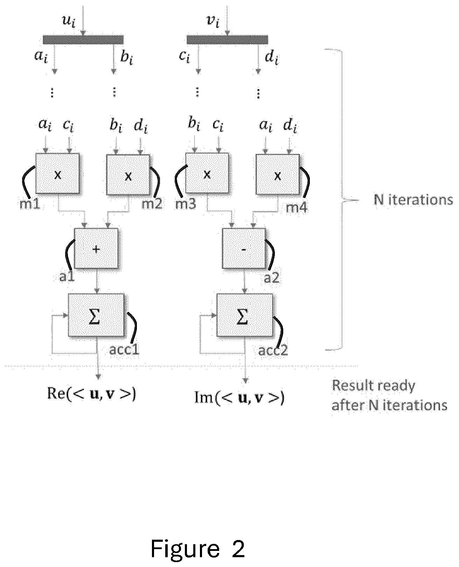

Figure 2 is a diagram showing the calculation of the dot product according to the first method. As shown, the dot product can be performed according to:

$$<\boldsymbol{u}, \boldsymbol{v}> = \sum_{i=1}^{N} u_i \cdot v_i^* = \sum_{i=1}^{N} (a_i c_i + b_i d_i) + j \sum_{i=1}^{N} (-a_i d_i + b_i c_i) \qquad (7)$$

As shown in figure 2, the four multiplications operations m1, m2, m3 and m4, are first carried out to calculate $a_i c_i$, $b_i d_i$, $a_i d_i$, and $b_i c_i$. The addition operation a1, and subtraction operation a2 are performed to calculate $(a_i c_i + b_i d_i)$ and $(-a_i d_i + b_i c_i)$. The Real and Imaginary parts of the dot product are calculated by performing accumulation operations acc1 and acc2 on the results of a1 and a2, and repeating the method for N iterations. Therefore, each of m1, m2, m3, m4, a1, a2, acc1, and acc2 are repeated N times. In other words, each of the operations are performed iteratively. It will be appreciated that the same concept will be applied for calculating the dot product where $\sum_{i=1}^{N} u_i \cdot v_i$, i.e. the vectors are not conjugated.

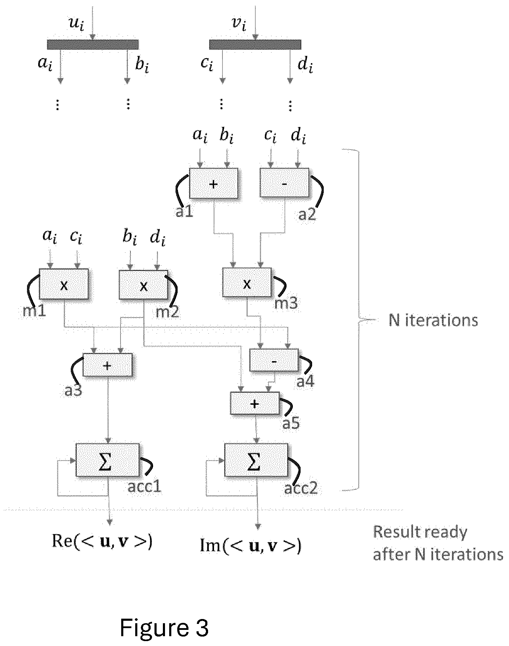

Figure 3 is a diagram showing the calculation of the dot product according to the second method. As shown, the dot product can be calculated according to:

$$<\boldsymbol{u}, \boldsymbol{v}> = \sum_{i=1}^{N} u_i \cdot v_i^* = \sum_{i=1}^{N} (a_i c_i + b_i d_i) + j \sum_{i=1}^{N} \big((a_i + b_i)(c_i - d_i) - a_i c_i + b_i d_i\big) \qquad (8)$$

As shown, the second method differs from the first method as there are more addition and subtraction operations performed compared to the first method. However, there are fewer multiplication operations performed in the second method compared to the first method. In particular, the second method begins by performing an addition operation a1, and a subtraction operation a2 to calculate $(a_i + b_i)$ and $(c_i - d_i)$, as found in equation 8. In this method, three multiplication operations are performed. In particular, m1 calculates $a_i c_i$ and m2 calculates $b_i d_i$. The results of m1 and m2 can be reused for both the Real part and the Imaginary part, to reduce the multiplication operations required. Additionally, multiplication operation m3 multiplies the results of a1 and a2. After the multiplication operations, addition operations a3, and a5, and subtraction operation a2 are performed to calculate $a_i c_i + b_i d_i$ and $(a_i + b_i)(c_i - d_i) - a_i c_i + b_i d_i$, as found in equation 8. Finally, accumulation operations acc1 and acc2 are performed, and the method is iterated N times to determine the Real and Imaginary parts of the dot product result. It will be appreciated that the same concept will be applied for calculating the dot product where $\sum_{i=1}^{N} u_i \cdot v_i$, i.e. the vectors are not conjugated.

We have appreciated that although the number of additions and/or subtractions is increased in the second method compared to the first method, the number of multiplications is reduced. We have realized that a multiplier consumes more energy than addition or subtraction, and that it would be advantageous to provide a dot product which reduces the number of high energy operations (i.e. reduce the number of multipliers).

It has been appreciated that it would be advantageous to further reduce the energy consumed by the dot product, and therefore we have provided the novel techniques described herein. To reduce the energy consumption, we have appreciated herein that it would be advantageous to reduce the number of multiplications required to calculate the dot product, and to reduce the number of operations contained within an operative loop. Such a reduction would improve the efficiency of the one or more ALUs which calculate the dot product.

Such an improved method will be described herein with reference to a novel third method of performing a complex dot product. As in the first and second methods, the method performs a complex dot product on two vectors, where each of the two vectors has a dimension N, and comprises vector elements. At least one of the vectors has an imaginary part. In the embodiment described herein, both of the two vectors $\boldsymbol{u}$ and $\boldsymbol{v}$ have an imaginary part. Vectors $\boldsymbol{u}$ and $\boldsymbol{v}$ are the same vectors as described in relation to the first and second methods. As in the first and second methods, the complex dot product will be described for the conjugate of vector $\boldsymbol{v}$. However, it will be appreciated that the same concept may be applied for calculating the dot product where $\sum_{i=1}^{N} u_i \cdot v_i$ , i.e. neither vector is conjugated.

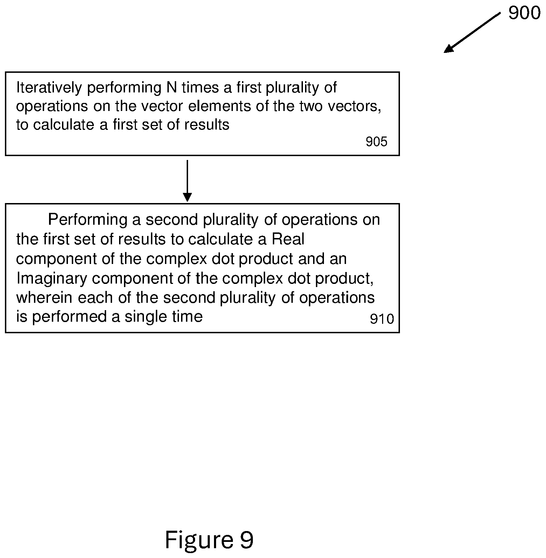

In general, as shown in figure 9, the third method 900 comprises a first step, 905, of iteratively performing, N times, a first plurality of operations $S_x$, on the vector elements of the two vectors to calculate a first set of results. The first set of results may be stored in memory to which the ALU has access (i.e. a memory associated with the ALU). Subsequently, the method may comprise a second step, 910, of performing a second plurality of operations on the first set of results to calculate a Real component of the complex dot product and an Imaginary component of the complex dot product. Therefore, the method may comprise accessing the first set of results from the memory. The second plurality of operations are performed a single time, i.e. not iteratively.

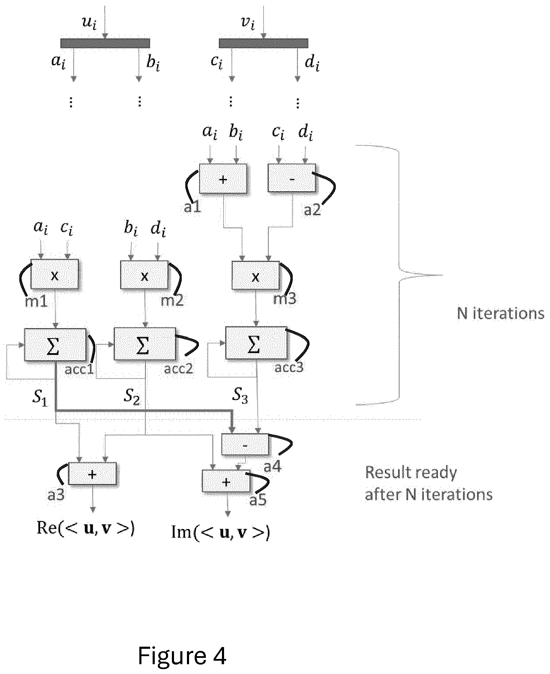

A specific example of the third method is illustrated in figure 4, and will now be described. In particular the complex dot product in figure 4 is performed by equation 9:

$$< \boldsymbol{u}, \boldsymbol{v} \geq \sum_{i=1}^{N} u_i \cdot v_i^* = \sum_{i=1}^{N} (a_i c_i + b_i d_i) + j \sum_{i=1}^{N} \big( (a_i + b_i)(c_i - d_i) - a_i c_i + b_i d_i \big)$$

$$= \overbrace{\sum_{i=1}^{N} a_i c_i}^{\overset{S_1}{N}} + \overbrace{\sum_{i=1}^{N} b_i d_i}^{\overset{S_2}{N}} + j \left( \overbrace{\sum_{i=1}^{N} (a_i + b_i)(c_i - d_i)}^{\overset{S_3}{N}} - \sum_{i=1}^{N} a_i c_i + \sum_{i=1}^{N} b_i d_i \right)$$

$$= (S_1 + S_2) + j(S_3 - S_1 + S_2) \tag{9}$$

In other words, one or more operations are performed outside of the iteration. In this example, one or more addition and/or subtraction operations are performed a single time to calculate $(S_1 + S_2)$ and $(S_3 - S_1 + S_2)$, as shown in equation 9. Therefore, using the third method, the number of operations may be reduced by removing operations from the iteration.

In this example, the third method comprises performing a first set of operations: $S_1$, $S_2$, and $S_3$, N times. These operations are defined as follows:

$$S_1 = \sum_{i=1}^{N} a_i c_i \tag{10}$$

$$S_2 = \sum_{i=1}^{N} b_i d_i \tag{11}$$

$$S_3 = \sum_{i=1}^{N} (a_i + b_i)(c_i - d_i) \tag{12}$$

As shown in figure 4, a set of first operations are performed to calculate $S_1$, $S_2$ and $S_3$. These operations may include addition operations, subtraction operations, multiplication operations and accumulation operations, as described in relation to the second method. The first set of operations are performed N times, i.e. they are performed iteratively, to calculate $S_1$, $S_2$ and $S_3$, i.e. to calculate a first set of results. For example, firstly the first set of operations is performed for $i = 1$, and then, the first set of operations may be performed for $i = 2$. The results from the first set of operations for $i = 1$ and $i = 2$ are accumulated, and so on until the results of $i = N$ have been accumulated with the previous results. One operation of the first set of operations may calculate a first result of the first set of results, and a second operation of the first set of operations may calculate a second result using the first set of results. In other words, a result may be reused. For example, a multiplication operation may be used to calculate $a_i c_i$, where the result can be used in both the Real and Imaginary parts. Therefore, the operation does not need to be repeated. This reduces the number of operations which need to be carried out, and therefore decreases the energy required and the time required to perform the dot product.

As shown in figure 4, after completing the first set of operations N times, the method may subsequently comprise performing a second set of operations, where the operations are only performed once, rather than iteratively. In other words, the operations are moved out of the iteration. In this example, the second set of operations includes addition operations and subtraction operations. A combination of the calculated results $S_1$, $S_2$ and $S_3$ may be added and/or subtracted to calculate each of the Real and Imaginary parts of the complex dot product. In this example, the Real and Imaginary parts of the complex dot product may be calculated according to:

$$\mathrm{Re}(<\mathbf{u}, \mathbf{v}>) = (S_1 + S_2) \tag{13}$$

$$\mathrm{Im}(<\mathbf{u}, \mathbf{v}>) = (S_3 - S_1 + S_2) \tag{14}$$

The third method, described in relation to figure 4, reduces the number of operations required, as a number of operations have been removed from the iteration, and therefore each only needs to be performed once, rather than being performed N times.

The number of operations used in each of the first method, second method and third method are shown table 1.

As shown in table 1, the third method has fewer multiplication operations than the first method. Furthermore, the third method has fewer additions and subtractions than the second method. Therefore, it will be appreciated, that although the number of accumulations is greater in the third method than the first and second methods, the lower number of multiplications in the third method compared to the first method results in a faster and lower energy calculation than the first method. As discussed above, multiplication operations require more energy than addition and subtraction operations, and are slower than addition and subtraction operations. Therefore, the third option requires less energy to compute the complex dot product than the first method, as the number of multiplication operations is lower by N. Although the number of accumulations is higher in the third method than the first, this has less of an impact on the energy requirement compared to the number of multiplications. Additionally, the third method requires fewer addition and subtraction operations than the second method. Although the second method has fewer accumulation operations than the third method, the difference in number of addition/subtraction operations results in the third method having a lower energy requirement than the second method. In some examples, a multiplication operation may require approximately 5 times more energy than addition, subtraction and accumulation operations. Therefore, the decrease in number of multiplication operations in the third method makes up for the increase in additions, subtraction and accumulation operations.

Therefore, the third method provides a method for determining a complex dot product which requires less multiplication operations to be performed compared to the first method, and less addition/subtraction operations to be performed compared to the second method, and therefore increases the efficiency and speed at which the ALU can perform the complex dot product. In relation to the methods described herein, the operations described may be any of: addition operations; subtraction operations; multiplication operations; and accumulation operations.

Table 2 presents the performance of the three approaches using fixed-point arithmetic with 16-bit inputs (16 bits for the real and imaginary components). The parameters m1... m4, a1... a5, and acc1... acc3 refer to the operations described in relation to figures 2, 3, and 4. The table contains the signal-to-quantization noise-ratio (SQNR) compared to a double-precision floating-point reference. The table also contains the energy required for the dot product (assuming the use of an ASIC standard cell library based on 7 nm process nodes). Finally, the table contains the reduction of energy compared to the first method.

The first three rows of table 2 present implementations where there is no mathematical error compared to floating-point (and therefore results in the infinite decibels in the SQNR). The minimum number of bits were selected for each method to have a fair comparison. The last three rows present implementations with all signals set to 16 bits. It can be seen that method 3 outperforms the methods 1 and 2 in both scenarios. As shown in table 2, the energy reduction using the third method compared to the first method is 17.77% for both of the implementations. This is a greater energy reduction compared to the second method, wherein in the second method the energy reduction is 6.21% for the implementation with no mathematical error, and 10.75% for the implementation with all signals set to 16 bits.

Although not shown in table 2, floating-point implementations will also display energy reductions if the third method is applied.

In the example of 5G considered above, $x_s$ is an N-element complex vector, and $y_s$ is an M-element complex vector. In this example, N=8 and M=64, and there are 3300 subcarriers (S), so the total number of multiplications and additions can be computed. To do so, the number of dot products required is calculated by multiplying S by M, which in this example equals 211200 dot products. The number of dot products is multiplied by the number of number of multiplications, additions/subtractions, and accumulations shown in table 3. The table also shows the difference in number of multiplication operations compared to the first method of dot product described herein. The table also shows the difference in the total number of additions, subtractions, and accumulations, compared to the first method of dot product described herein.

As shown in table 3, the third method comprises 25% less multiplication operations than the first method. The total number of addition, subtraction, and accumulation operations are also 34.8% greater in the third method compared to the first method. However, the reduction in multiplication operations saves more energy and time than the increase due to the increase in addition, subtraction and accumulation operations. Therefore, the third method results in the one or more ALUs being used more efficiently to calculate the complex dot product.

As described herein, the reduction in number of multiplication operations has a greater increase to the efficiency compared to the reduction in efficiency caused by the increase in number of additions, subtractions and/or accumulations. In this example of OFDM, the dot products are performed in less time than the OFDM symbol duration (approximately 36 microseconds, $\mu$s, for a bandwitdth of 100 Mhz). They are also performed continuously as the OFDM symbols are transmitted as a stream. By reducing the number of multiplication operations required, the complex dot product may be calculated faster, and it is possible to perform the dot products in less than the OFDM symbols using the third method.

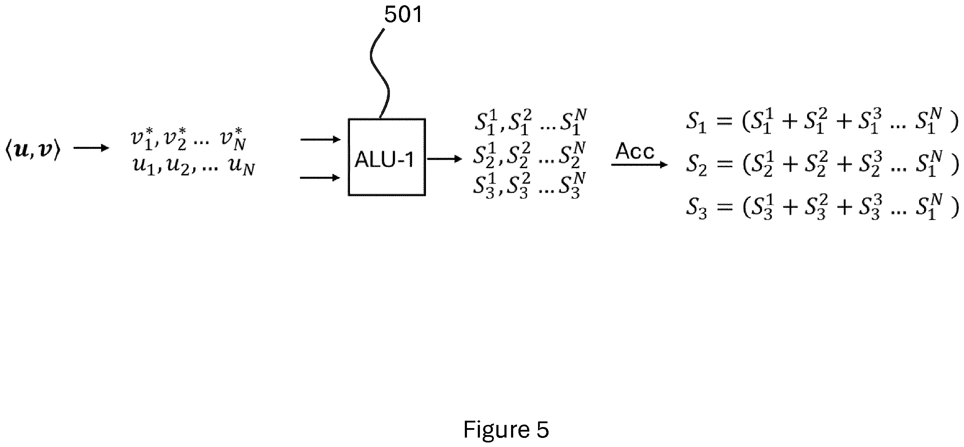

Figure 5 shows an example of a single ALU performing a dot product according to the third method described herein. An ALU is an Arithmetic Logic Unit, which is a combinational digital circuit which performs arithmetic and bitwise operations on integer binary numbers. The skilled person will be aware of different types of ALU and their applications. It will be understood that the methods described herein may be applied to any ALU. The one or more ALUs described herein may be part of a processor. A processor may be any kind of general purpose or dedicated processor, such as a CPU, GPU, System-on-chip, state machine, media processor, an application-specific integrated circuit (ASIC), a programmable logic array, a field-programmable gate array (FPGA), or the like. A computer or computer system may comprise one or more processors.

As shown in figure 5, and as described herein with reference to the third method, the complex vectors may have N elements, such that $\boldsymbol{v} = v_1^*, v_2^* \dots v_N^*$ and $\boldsymbol{u} = u_1, u_2, \dots u_N$. The vector elements are input into an ALU, which is labelled as ALU-1 in figure 5. As described herein, a first set of operations is performed on the input vector elements, wherein the first set of operations are performed iteratively to produce results $S_x$. In other words, the first set of operations are performed N times, where each of the vectors have N vector elements. As described herein, and as shown in figure 5, $S_1$, $S_2$, and $S_3$ (defined by equation numbers 10, 11 and 12) are calculated iteratively. As shown in figure 5, $S_1$, $S_2$, and $S_3$ are calculated for each of $u_i \cdot v_i^*$, wherein for example $u_1 \cdot v_1^*$ results in $S_1^1, S_2^1, S_3^1$. The ALU calculates the $S_1$, $S_2$, and $S_3$ for the vector elements one by one, in other words $S_1^2, S_2^2, S_3^2$ are calculated after $S_1^1, S_2^1, S_3^1$. The results calculated for each of $S_1^1, S_2^1, S_3^1 \dots S_1^N, S_2^N, S_3^N$ are accumulated to calculate $S_1$, $S_2$, and $S_3$. In other words, the values of $S_1^2, S_2^2, S_3^2$ are accumulated with the values of $S_1^1, S_2^1, S_3^1$, and $S_1$, $S_2$, and $S_3$ are the final result of the accumulation of $S_1 = (S_1^1 + S_1^2 + S_1^3 \dots S_1^N)$, $S_2 = (S_2^1 + S_2^2 + S_2^3 \dots S_2^N)$, and $S_3 = (S_3^1 + S_3^2 + S_3^3 \dots S_3^N)$.

Subsequently, as described herein, a second set of operations are performed on the accumulated values of $S_1$, $S_2$, and $S_3$ (i.e. they are performed on the result of the accumulation), to provide the complex dot product. The second set of operations may be solely addition and subtraction operations, where optionally the operations calculate the Real and Imaginary parts of the complex dot product using $< \boldsymbol{u}, \boldsymbol{v} > = (S_1 + S_2) + j(S_3 -$

$S_1 + S_2)$. As described herein, this method removes operations from the iterative loop, as the second set of operations are performed only one time. In particular, addition and subtraction operations are removed from the iterative loop, and therefore the number of addition and subtraction operations required in the calculation are reduced compared to the second method description here. Furthermore, by calculating the complex dot product using the third method, the number of multiplications is reduced compared to the first method. Multiplications are energy intensive, and therefore by reducing the number of multiplications reduces the energy required to calculate the dot product overall, even though the number of accumulations and additions/subtractions has increased. Therefore, the ALU can calculate the dot product using less energy by using the third method described herein.

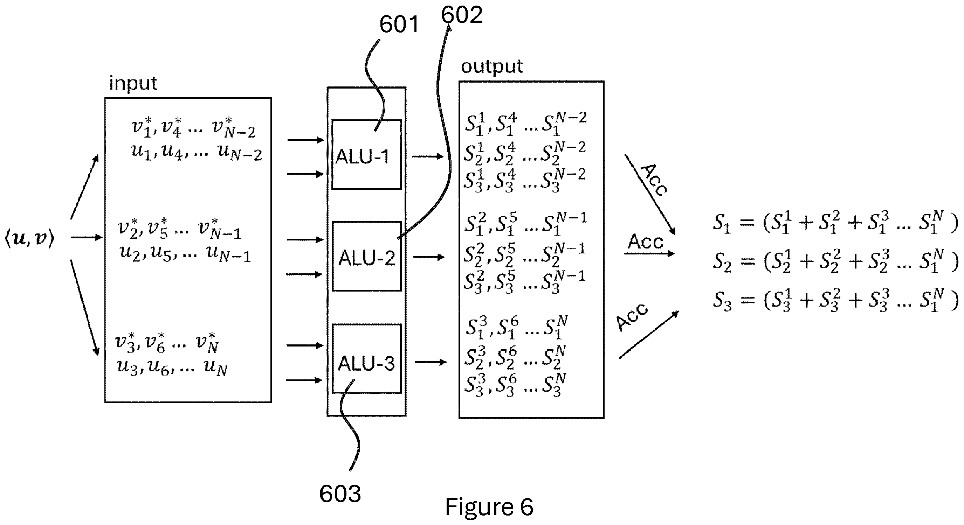

Figure 6 shows an example of three ALUs configured in parallel to perform a dot product according to the third method described herein. The ALUs being configured in parallel enables the operations to be performed in parallel (that is, at the same time, which may mean, for example, in co-extensive or overlapping time periods). In this example, by performing the operations in parallel, the dot product may be performed in less time than the time taken to perform the operations using one ALU. In the case of one ALU, the operations must be performed one at a time, as described in relation to figure 5. Whereas, for vectors having N elements, using the configuration illustrated in figure 6, the dot product may take a third of the time, as the operations may be shared between the three ALUs. Contrastingly, in a configuration with one ALU, the ALU performs each operation, and therefore the one ALU carries out N iterations of the methods described herein. Whereas, for example, if there are three ALUs each ALU may iteratively perform the first set of operations N/3 times. It will be appreciated that by using parallelisation in combination with the third method described herein, the dot product may be performed more quickly and using less energy than the first or second methods being performed by a single ALU.

As described herein, the third method provides the advantage that the dot product may be performed using less multiplication operations. Therefore, as multiplication operations are slower and more energy intensive than addition/-subtraction operations, by reducing the multiplication operations, the dot product may be performed faster and using less energy. Therefore, by combining parallelisation and the third method herein, the dot product may be performed more quickly than the first and second methods described herein.

In the example illustrated in figure 6, the three ALUs: ALU-1 601, ALU-2 602, and ALU-3 603, are configured in parallel. Each of the vector elements are input into one of the ALUs. For example, as shown in figure 6, $v_1^*, v_4^* \dots v_{N-2}^*$ and $u_{1;} u_4, \dots u_{N-2}$ are input into ALU-1. Vector elements $v_2^*, v_5^* \dots v_{N-1}^*$ and $u_2, u_5, \dots u_{N-1}$ are input into ALU-2. Vector elements $v_3^*, v_6^* \dots v_N^*$ and $u_3, u_6, \dots u_N$ are input into ALU-3.

The ALUs perform the first set of operations iteratively to calculate each of the values of $S_1$, $S_2$, and $S_3$ for each set of vector elements. For example, as shown in figure 6, ALU-1 outputs $S_2^1, S_2^4 \dots S_2^{N-2}, S_1^1, S_1^4 \dots S_1^{N-2}, S_3^1, S_3^4 \dots S_3^{N-2}$. These values may be accumulated by ALU-1, and stored in a memory associated with ALU-1, i.e. a memory which is in communication with ALU-1. The values from the first set of operations performed by ALU-1 may be accumulated with the results of the first set of operations from the second and third ALUs (ALU-1 and ALU-2). The results may be accumulated by any of the first, second or third ALUs. The values of $S_1$, $S_2$, and $S_3$ are calculated according to $S_1 = (S_1^1 + S_1^2 + S_1^3 \dots S_1^N)$, $S_2 = (S_2^1 + S_2^2 + S_2^3 \dots S_2^N)$, and $S_3 = (S_3^1 + S_3^2 + S_3^3 \dots S_3^N)$. As described herein, a second set of operations are performed on the values of $S_1$, $S_2$, and $S_3$ to calculate the Real and Imaginary components of the dot product. The operations may be performed by any one or more of the three ALUs.

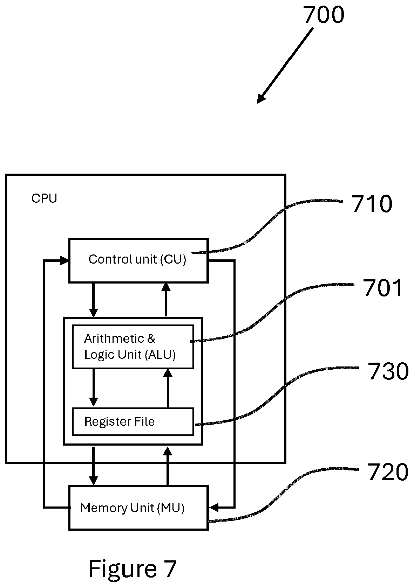

Figure 7 provides an example of a processor 700 comprising an ALU, wherein the processor is a CPU. A processor which is not a CPU, not shown here, may also comprise the features described in relation to figure 7. The processor may comprise an ALU 701, a memory unit (MU) 720, and a control unit (CU) 710. The processor may also comprise a register file 730. The register file may be used to store the output from the ALU (for example the output from the accumulation operations described herein), instead of the output being stored in the memory unit. The ALU performs the arithmetic and logical operations, and may be configured to perform the dot product operations described herein. The CU may send control signals to the ALU to instruct the ALU to perform a specific operation, e.g. one or more of the operations described herein, such as addition, subtraction, accumulation and/or multiplication. In other words, the command sent to the ALU may be generated by the CPU after fetching instructions from the memory (i.e. the code). These commands sent to the ALU are binary codes which configure the behaviour of the ALU. By using the novel techniques of the third method described herein, the ALU will be commanded to be set in a multiplication mode less times than using the first or second method. Therefore, this will lead to energy savings, as described herein.

The ALU may be in communication with the memory unit, where the memory unit (e.g. RAM) may be located outside of the CPU. The result of the operation, and/or the dot product, may be stored in the memory unit 720.

As described herein, an ASIC and/or an FPGA may use a CPU to perform the method described herein. Alternatively, the ASIC and/or FPGA may implement a custom circuit. The custom circuit may also be referred to as a custom datapath, or custom hardware datapath.

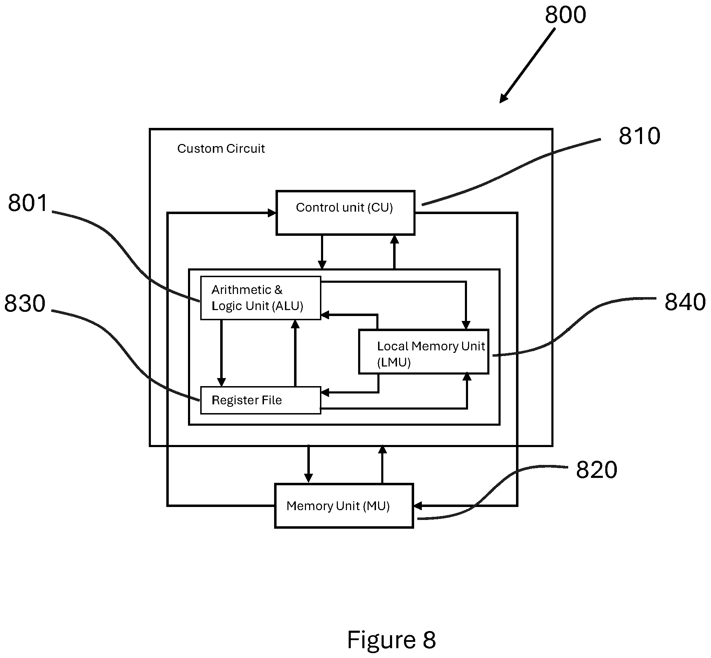

An example of a custom circuit, configured to perform the dot product according to the methods described herein, is illustrated in Figure 8. The custom circuit may be similar to the CPU described in relation to figure 7. However, the custom circuit 800 comprises a control unit (CU) 810, an arithmetic logic unit (ALU) 801, one or more local memory units (LMU) (840), and one or more registry files (830). The CU, ALU, LMU and registry file are in communication with each other, and may be located in the same hardware block. The specific circuit is also in communication with a memory unit (MU) 820 which is external to the specific unit 800.

By using a custom circuit to perform the method, it is possible to avoid reading instructions from the memory, as the control unit may have the instructions embedded. Therefore, the instructions for the operations may be received more quickly. The control unit may be a finite state machine (FSM) configured to repeatedly perform a set (or a subset) of predefined steps. The specific circuit may further comprise one or more local memory units (LMU), where the one or more LMUs are communication with the ALU and may be located near to the ALU. The one or more LMUs may be small memory units. The one or more LMUs may provide faster access to memory compared to the memory unit (which may be located outside of the specific circuit. The use of one or more LMUs results in faster access to memory due to their close proximity to the arithmetic unit. Additionally, in the embodiment in which there are multiple LMUs connected to the ALU, the multiple LMUs may be accessed in parallel.

In some embodiments, the custom circuit may be used as an accelerator to a CPU (which may be a CPU described herein). Therefore, in some embodiments, an ASIC or FPGA may comprise both a CPU (for example CPU 700 described in relation to figure 7) and a custom circuit 800 (as described in figure 8).The vector elements described herein may be provided to the ALU by a digital interface. For example, a parallel bus may feed all of the vector elements to the one or more ALUs simultaneously and another output bus may be provided for the result of the dot product. Alternatively, a serial bus may feed the data sequentially to the one or more ALUs and another serial bus may be provided for the output. Alternatively, a parallel bus may be connected to one or more memory units, and the vector elements may be received at the one or more ALUs from ROM (Read-only memory) or RAM (Random-access memory), while the output can be stored in RAM memory, wherein the RAM memory for the output is the same or different to the RAM memory used for the input.

It will be appreciated, that although the third computational method described herein is described in relation to vectors, the method may also be used to calculate the dot product between matrices, using the same novel techniques.

Certain embodiments can also be embodied as computer-readable code on a non-transitory computer-readable medium. The computer readable medium may be any data storage device than can store data, which can thereafter be read by a computer system. Examples of the computer readable medium include hard drives, network attached storage (NAS), read-only memory, random-access memory, CD-ROMs, CD-Rs, CD-RWs, magnetic tapes, and other optical and non-optical data storage devices. The computer readable medium can also be distributed over a network coupled computer systems so that the computer readable code is stored and executed in a distributed fashion. Although embodiments according to the disclosure have been described with reference to particular types of devices and applications (particularly augmented reality devices) and the embodiments have particular advantages in such case, as discussed herein, approaches according to the disclosure may be applied to other types of device and/or application. Each feature disclosed in this specification, unless stated otherwise, may be replaced by alternative features serving the same, equivalent or similar purpose. Thus, unless stated otherwise, each feature disclosed is one example only of a generic series of equivalent or similar features.

All of the aspects and/or features disclosed in this specification may be combined in any combination, except combinations where at least some of such features and/or steps are mutually exclusive. In particular, the preferred features of the disclosure are applicable to all aspects and embodiments of the disclosure and may be used in any combination. Likewise, features described in non-essential combinations may be used separately (not in combination).

It will be appreciated that there is an implied "about" prior to temperatures, concentrations, times, pressures, flow rates, cross-sectional areas, voltages, currents, etc. discussed in the present teachings, such that slight and insubstantial deviations are within the scope of the present teachings. Furthermore, values referred to as being "equal" may in fact differ by less than a threshold amount. The threshold amount may be 5%, for example. The threshold may also be greater than 5% (e.g., 10%, 20% or 50%) or less than 5% (for example, 2% or 1 %), depending on the context.

As used herein, including in the claims, unless the context indicates otherwise, singular forms of the terms herein are to be construed as including the plural form and vice versa. For instance, unless the context indicates otherwise, a singular reference herein including in the claims, such as "a" or "an" (such as a component) means "one or more" (for instance, one or more components).

Throughout the description and claims of this disclosure, the words "comprise", "including", "having" and "contain" and variations of the words, for example "comprising" and "comprises" or similar, mean "including but not limited to", and are not intended to (and do not) exclude other components. Also, the use of "or" is inclusive, such that the phrase "A or B" is true when "A" is true, "B is true", or both "A" and "B" are true.

The use of any and all examples, or exemplary language ("for instance", "such as", "for example" and like language) provided herein, is intended merely to better illustrate the disclosure and does not indicate a limitation on the scope of the disclosure unless otherwise claimed. No language in the specification should be construed as indicating any non-claimed element as essential to the practice of the disclosure.

The terms "first" and "second" may be reversed without changing the scope of the invention. That is, an element termed a "first" element (e.g., a first component) may instead be termed a "second" element (e.g., a second component) and an element termed a "second" element (e.g., a second component) may instead be considered a "first" element (e.g. a first component).

Any steps described in this specification may be performed in any order or simultaneously unless stated or the context requires otherwise. Moreover, where a step is described as being performed after a step, this does not preclude intervening steps being performed.

It is also to be understood that, for any given component or embodiment described herein, any of the possible candidates or alternatives listed for that component may generally be used individually or in combination with one another, unless implicitly or explicitly understood or stated otherwise. It will be understood that any list of such candidates or alternatives is merely illustrative, not limiting, unless implicitly or explicitly understood or stated otherwise.

In this detailed description of the various embodiments, for the purposes of explanation, numerous specific details are set forth to provide a thorough understanding of the embodiments disclosed. One skilled in the art will appreciate, however, that these various embodiments may be practiced with or without these specific details. Furthermore, one skilled in the art can readily appreciate that the specific sequences in which methods are presented and performed are illustrative and it is contemplated that the sequences can be varied and still remain within the scope of the various embodiments disclosed herein. All literature and similar materials cited in this application, including but not limited to patents, patent applications, articles, books, treaties and internet web pages are expressly incorporated by reference in their entirety for any purpose. Unless otherwise described, all technical and scientific terms used herein have a meaning as is commonly understood by one of ordinary skill in the art to which the various embodiments described herein belongs.

Table 1

| Method | Multiplications | 2-input Additions/Subtractions | Accumulations |
|---|---|---|---|
| 1 | 4N | 2N | 2N |
| 2 | 3N | 5N | 2N |
| 3 | 3N | 2N+3 | 3N |

Table 3

| Method | Mult. | 2-input Additions/Subtractions | Acc. | % difference with 1 (mult.) | % difference with 1 (add/sub/acc.) |
|---|---|---|---|---|---|
| 1 | 6758400 | 3379200 | 3379200 | - | - |
| 2 | 5068800 | 8448000 | 3379200 | 25 % (less) | 75 % (more) |
| 3 | 5068800 | 4012800 | 5068800 | 25 % (less) | 34,8 % (more) |

Table 2

| method | m1 | m2 | m3 | m4 | a1 | a2 | a3 | | a4 | a5 | acc1 | acc2 | acc3 | SQNR (dB) | Energy (nJ) | % |
|---|---|---|---|---|---|---|---|---|---|---|---|---|---|---|---|---|
| 1 | 16x16 | 16x16 | 16x16 | 16x16 | 32 | 32 | - | | - | - | 35 | 35 | - | Inf | 2.0436 | - |
| 2 | 16x16 | 16x16 | 16x16 | - | 32 | 32 | 32 | | 32 | 32 | 35 | 35 | - | Inf | 1.9166 | 6.21 |
| 3 | 16x16 | 16x16 | 16x16 | - | 16 | 16 | 35* | | 35* | 35* | 35 | 35 | 35 | Inf | 1.6806 | 17.77 |
| 1 | 16x16 | 16x16 | 16x16 | 16x16 | 16 | 16 | - | | - | - | 16 | 16 | - | 55.32 | 1.768 | - |
| 2 | 16x16 | 16x16 | 16x16 | - | 16 | 16 | 16 | | 16 | 16 | 16 | 16 | - | 53.34 | 1.578 | 10.75 |
| 3 | 16x16 | 16x16 | 16x16 | - | 16 | 16 | 16 | | 16* | 16* | 16 | 16 | 16 | 59.45 | 1.4539 | 17.77 |

**Claims**

1. A computational method for performing a complex dot product on two vectors, each of the two vectors having a dimension N and comprising vector elements, at least one of the vector elements having an imaginary part, j, the computational method being performed by one or more arithmetic logic units, ALUs, the method comprising:

   iteratively performing N times a first plurality of operations, $S_x$, by the one or more ALUs, on the vector elements of the two vectors, to calculate a first set of results, the first set of results being stored in memory associated with the one or more ALUs;
   performing a second plurality of operations, by the one or more ALUs, on the first set of results to calculate a Real component of the complex dot product and an Imaginary component of the complex dot product, wherein each of the second plurality of operations is performed a single time.

2. A computational method according to claim 1 wherein the first plurality of operations comprises any one or more of: subtraction operations; addition operations; accumulation operations; and multiplication operations on the vector elements of the two vectors.

3. A computational method according to any preceding claim wherein the second plurality of operations comprises any one or more of addition operations; and subtraction operations on the vector elements of the two vectors.

4. A computational method according to any preceding claim comprising performing one operation of the first plurality of operations to calculate a first result of the first set of results, and performing a second operation of the first plurality of operations to calculate a second result of the first set of results, wherein the second operation uses the first result to calculate the second result.

5. A computational method according to any preceding claim wherein the first plurality of operations and the second plurality of operations are performed to determine the result of a dot product operation

$$< \boldsymbol{u}, \boldsymbol{v} >= \sum_{i=1}^{N} u_i \cdot v_i^* = \sum_{i=1}^{N}(a_i c_i + b_i d_i) + j \sum_{i=1}^{N}\big((a_i + b_i)(c_i - d_i) - a_i c_i + b_i d_i\big),$$ wherein $\boldsymbol{u}$ and $\boldsymbol{v}$ are vectors, and $a_i$, $b_i$, $c_i$, $d_i$ are each vector elements.

6. A computational method according to claim 5 wherein the operations of the first plurality of operations, $S_x$, comprise one or more: of

$$S_1 = \sum_{i=1}^{N} a_i c_i; \quad S_2 = \sum_{i=1}^{N} b_i d_i; \text{ and } \quad S_3 = \sum_{i=1}^{N}(a_i + b_i)(c_i - d_i).$$

7. A computational method according to claim 5 or 6 wherein the second plurality of operations calculate the Real component of the complex dot product and the Imaginary component of the complex dot product according to $< \boldsymbol{u}, \boldsymbol{v} >= (S_1 + S_2) + j(S_3 - S_1 + S_2)$.

8. A computational method according to any preceding claim wherein the vector elements may be provided to the one or more ALUs via a digital interface, or from a memory ALU to which the one or more ALUs has access.

9. A computational method according to claim 8 wherein, the vector elements are provided to the one or more ALUs using any one of a parallel bus; a serial bus; ROM; or RAM.

10. A computer processor comprising:
    One or more arithmetic logic units, each configured to perform the method of claims 1 to 9.

11. A computer processor according to claim 10 wherein the one or more arithmetic logic units comprise a plurality of arithmetic logic units arranged in parallel.

12. A computer processor according to any of claims 10 to 11 wherein the computer processor is a CPU.

13. A computer processor according to any of claims 10 to 11 wherein the computer processor is an ASIC or a FPGA.

14. A computer processor according to claim 13 wherein the ASIC or FPGA comprises a CPU and/or a custom circuit.

Figure 1

Figure 2

Figure 3

Figure 4

EP 4 687 023 A1

$$\langle \boldsymbol{u}, \boldsymbol{v} \rangle \longrightarrow \begin{matrix} v_1^*, v_2^* \dots v_N^* \\ u_1, u_2, \dots u_N \end{matrix} \longrightarrow \boxed{\text{ALU-1}} \longrightarrow \begin{matrix} S_1^1, S_1^2 \dots S_1^N \\ S_2^1, S_2^2 \dots S_2^N \\ S_3^1, S_3^2 \dots S_3^N \end{matrix} \xrightarrow{\text{Acc}} \begin{matrix} S_1 = (S_1^1 + S_1^2 + S_1^3 \dots S_1^N) \\ S_2 = (S_2^1 + S_2^2 + S_2^3 \dots S_1^N) \\ S_3 = (S_3^1 + S_3^2 + S_3^3 \dots S_1^N) \end{matrix}$$

501

Figure 5

Figure 6

EP 4 687 023 A1

Figure 7

EP 4 687 023 A1

EP 4 687 023 A1

Figure 8

900

Iteratively performing N times a first plurality of
operations on the vector elements of the two vectors,
to calculate a first set of results

905

Performing a second plurality of operations on
the first set of results to calculate a Real
component of the complex dot product and an
Imaginary component of the complex dot product,
wherein each of the second plurality of operations
is performed a single time                    910

Figure 9

Europäisches
Patentamt

European
Patent Office

Office européen
des brevets

# EUROPEAN SEARCH REPORT

**Application Number**

EP 24 38 2835

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/310820 A1 (ZIVKOVIC ZORAN [NL]) 1 October 2020 (2020-10-01) * paragraph [0130] - paragraph [0198]; figure 18 * | 1-14 | INV. G06F7/544 |
| A | US 2021/026628 A1 (BISCONDI ERIC [FR] ET AL) 28 January 2021 (2021-01-28) * paragraph [0047] - paragraph [0066]; figure 4 * | 1-14 | |
| A | US 2011/055517 A1 (EICHENBERGER ALEXANDRE E [US] ET AL) 3 March 2011 (2011-03-03) * paragraph [0220] - paragraph [0251] * | 1-14 | |

TECHNICAL FIELDS
SEARCHED (IPC)

G06F

The present search report has been drawn up for all claims

| Place of search | Date of completion of the search | Examiner |
|---|---|---|
| Munich | 13 January 2025 | Tenbieg, Christoph |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 38 2835

This annex lists the patent family members relating to the patent documents cited in the above-mentioned European search report.
The members are as contained in the European Patent Office EDP file on
The European Patent Office is in no way liable for these particulars which are merely given for the purpose of information.

13-01-2025

| Patent document cited in search report | Publication date | Patent family member(s) | Publication date |
|---|---|---|---|
| US 2020310820 A1 | 01-10-2020 | CN 111752608 A | 09-10-2020 |
| | | EP 3716047 A1 | 30-09-2020 |
| | | US 2020310820 A1 | 01-10-2020 |
| US 2021026628 A1 | 28-01-2021 | CN 110914800 A | 24-03-2020 |
| | | EP 3655851 A1 | 27-05-2020 |
| | | GB 2564696 A | 23-01-2019 |
| | | IL 271635 A | 27-02-2020 |
| | | JP 7343473 B2 | 12-09-2023 |
| | | JP 2020527795 A | 10-09-2020 |
| | | KR 20200026992 A | 11-03-2020 |
| | | TW 201908964 A | 01-03-2019 |
| | | US 2021026628 A1 | 28-01-2021 |
| | | WO 2019016507 A1 | 24-01-2019 |
| US 2011055517 A1 | 03-03-2011 | NONE | |

EPO FORM P0459

For more details about this annex : see Official Journal of the European Patent Office, No. 12/82